# EUROPÄISCHE PATENTSCHRIFT

(11) **EP 0 768 359 B1**
(45) Veröffentlichungstag und Bekanntmachung des Hinweises auf die Patenterteilung: **02.05.2001**
(21) Anmeldenummer: 96116026.4
(22) Anmeldetag: 07.10.1996
(51) Int. Cl.: C09K 19/30, C09K 19/04

(54) **Elektrooptische Flüssigkristallanzeige**
Electro-optical liquid crystal display
Affichage à cristaux liquides électro-optique

(30) Priorität: 11.10.1995 DE 19537802
(43) Veröffentlichungstag der Anmeldung: 16.04.1997
(73) Patentinhaber: MERCK PATENT GmbH, 64293 Darmstadt (DE)
(72) Erfinder: Tarumi, Kazuaki, Dr., 64342 Seeheim (DE); Beyer, Andreas, 63452 Hanau (DE); Huth, Anja, 85567 Grafing (DE); Poetsch, Eike, Dr., 64367 Mühltal (DE); Kompter, Michael, Dr., 64560 Riedstadt (DE)

(56) Entgegenhaltungen:
- EP-A- 0 387 032
- EP-A- 0 464 648
- EP-A- 0 492 222
- EP-A- 0 502 406
- EP-A- 0 507 094
- DATABASE WPI Week 9246 Derwent Publications Ltd., London, GB; AN 92-379194 XP002023127 & JP-A-04 279 560 (SEI CHEM) , 5.Oktober 1992

## Beschreibung

Die Erfindung betrifft eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine Verbindung der Formel II enthält, 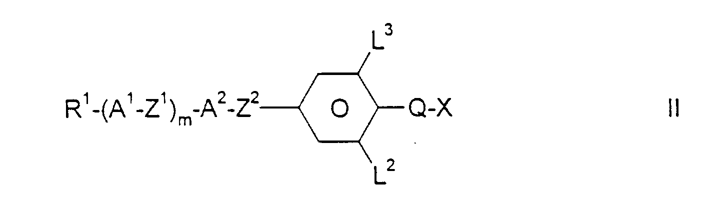 worin
- R¹: H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 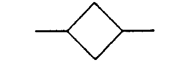 -CO-, -CO-O- oder -O-CO-O- so ersetzt sein können, daß O-Atome nicht direkt miteinander verknüpft sind,
- Q: einen Rest der Formel,

-(O)_{q}-(CH₂)ᵣ-(CF₂)ₛ-

worin
q 0 oder 1 ist,
r 0 oder eine ganze Zahl zwischen 1 und 6 ist und
s eine ganze Zahl zwischen 0 und 6 ist,
- X: F oder Cl, im Falle s ≠ 0 auch H, und
- A¹ und A²: jeweils unabhängig voneinander einen
(a) 1,4-Cyclohexenylen- oder trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Bicyclo(2,2,2)-octylen, Piperidin-1,4-diyl, Naphthalin-2,6-diyl, Decahydronapthalin-2,6-diyl und 1,2,3,4-Tetrahydronapthalin-2,6-diyl,
wobei die Reste (a) und (b) durch ein oder zwei Fluor substituiert sein können,
- L² und L³: jeweils unabhängig voneinander H oder F,
- Z¹ und Z²: jeweils unabhängig voneinander -CO-O-, -O-CO-, -CH₂O-, -OCH₂-, -CH₂CH₂, -CH=CH-, -C≡C- oder eine Einfachbindung, einer der Reste Z¹ und Z² auch -(CH₂)₄- oder -CH=CH-CH₂CH₂- und
- m: 0, 1 oder 2
bedeuten, und
daß das Medium mindestens eine Verbindung der Formel I enthält, 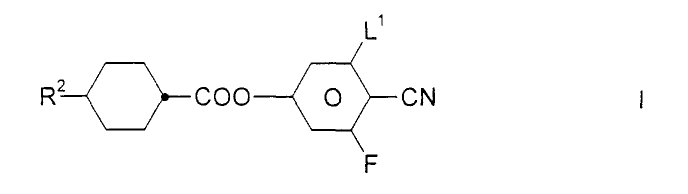 worin
- L¹: H oder F ist, und
- R²: die für R¹ angegebene Bedeutung besitzt.

In herkömmlichen Flüssigkristallanzeigen (TN, STN, OMI, AMD-TN) werden die elektrischen Felder zur Umorientierung im wesentlichen senkrecht zur Flüssigkristallschicht erzeugt.

JP 04-279 560 (A) und EP 0 464 648 (A) beschreiben Flüssigkristallanzeigen mit zur Flüssigkristallschicht senkrechtem elektrischen Feld.

In der internationalen Patentanmeldung WO 91/10936 wird eine Flüssigkristallanzeige offenbart, in der die elektrischen Signale so erzeugt werden, daß die elektrischen Felder eine signifikante Komponente parallel zur Flüssigkristallschicht aufweisen (IPS, In-Plane-Switching). Die Prinzipien, solch eine Anzeige zu betreiben, werden z.B. beschrieben von R.A. Soref in Journal of Applied Physics, Vol. 45, Nr. 12, S. 5466-5468 (1974).

In der EP 0 588 568 werden verschiedene Möglichkeiten zum Ansteuern solch einer Anzeige offenbart.

Diese IPS-Anzeigen können mit flüssigkristallinen Materialien entweder mit einer positiven oder mit einer negativen Dielektrizitätsanisotropie (△ε ≠ 0) betrieben werden. Mit den bisher bekannten Materialien werden in IPS-Anzeigen jedoch relativ hohe Schwellspannungen und lange Schaltzeiten erzielt. Es bestand daher die Aufgabe, flüssigkristalline Materialien aufzuzeigen die geeignet sind, bei IPS-Anzeigen relativ niedrige Schwellspannungen und kurze Schaltzeiten zu erzielen.

Diese Aufgabe wurde überraschenderweise gelöst durch Einsatz von flüssigkristallinen Materialien, welche mindestens eine Verbindung enthalten, die eine lateral fluorierte 4-(Cyclohexyl-carbonyloxy)benzonitrilgruppe aufweisen.

Solche Verbindungen sind z.B. bekannt aus der JP 58-210 057 und JP 4-279 560.

Es gibt darin jedoch keinen Hinweis, daß man mit Hilfe dieser Substanzen die Schwellspannungen und die Schaltzeiten von IPS-Anzeigen verbessern kann.

Gegenstand der Erfindung ist somit eine elektrooptische Flüssigkristallanzeige mit einer Umorientierungsschicht zur Umorientierung der Flüssigkristalle, deren Feld eine signifikante Komponente parallel zur Flüssigkristallschicht aufweist, enthaltend ein flüssigkristallines Medium mit positiver dielektrischer Anisotropie, wobei das Medium mindestens eine Verbindung der Formel II enthält, 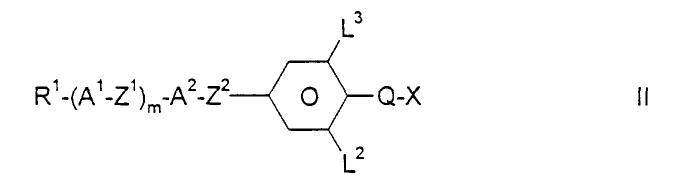 worin
- R¹: H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 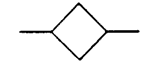 -CO-, -CO-O- oder -O-CO-O- so ersetzt sein können, daß O-Atome nicht direkt miteinander verknüpft sind,
- Q: einen Rest der Formel,

-(O)_{q}-(CH₂)ᵣ-(CF₂)ₛ-

worin
q 0 oder 1 ist,
r 0 oder eine ganze Zahl zwischen 1 und 6 ist und
s eine ganze Zahl zwischen 0 und 6 ist,
- X: F oder Cl, im Falle s ≠ 0 auch H, und
- A¹ und A²: jeweils unabhängig voneinander einen
(a) 1,4-Cyclohexenylen- oder trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Bicyclo(2,2,2)-octylen, Piperidin-1,4-diyl, Naphthalin-2,6-diyl, Decahydronapthalin-2,6-diyl und 1,2,3,4-Tetrahydronapthalin-2,6-diyl,
wobei die Reste (a) und (b) durch ein oder zwei Fluor substituiert sein können,
- L² und L³: jeweils unabhängig voneinander H oder F,
- Z¹ und Z²: jeweils unabhängig voneinander -CO-O-, -O-CO-, -CH₂O-, -OCH₂-, -CH₂CH₂, -CH=CH-, -C≡C- oder eine Einfachbindung, einer der Reste Z¹ und Z² auch -(CH₂)₄- oder -CH=CH-CH₂CH₂- und
- m: 0, 1 oder 2
bedeuten, und
daß das Medium mindestens eine Verbindung der Formel I enthält, 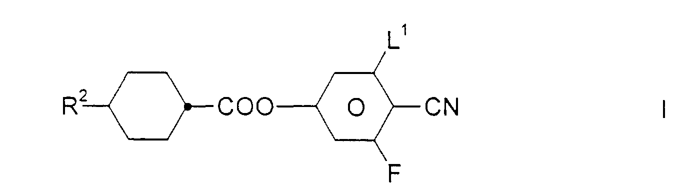 worin
- L¹: H oder F ist, und
- R²: die für R¹ angegebene Bedeutung besitzt.

Bevorzugte Ausführungsformen sind IPS-Anzeigen wobei
a) das Medium eine dielektrische Anisotropie Δε > 8,5 aufweist, vorzugsweise zwischen 8,6 und 14, insbesondere zwischen 8,7 und 13,5;
b) das Medium mindestens eine Verbindung der Formel III enthält,

   R³-(A³-Z³)ₒ-A⁴-R⁴ III

   worin
   - R³ und R⁴: jeweils unabhängig voneinander die für R¹ angegebene Bedeutung besitzen,
   - A³ und A⁴: jeweils unabhängig voneinander die für A¹ und A² angegebene Bedeutung besitzen,
   - Z³: jeweils unabhängig voneinander die für Z¹ und Z² angegebene Bedeutung aufweist, und
   - o: 1, 2 oder 3 ist;
c) das Medium mindestens eine von Formel I verschiedene Verbindung der Formel IV enthält, 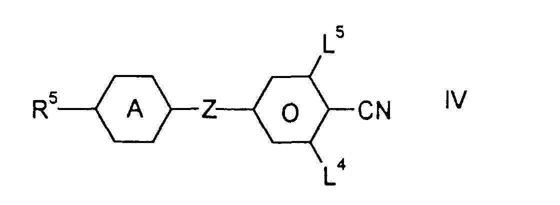 worin
   - R⁵: die für R¹ angegebene Bedeutung aufweist, 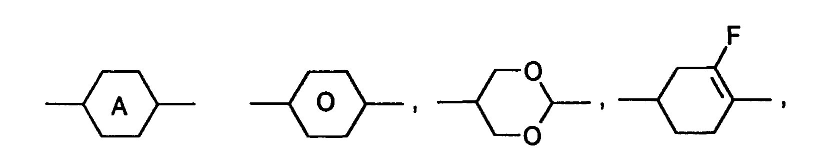 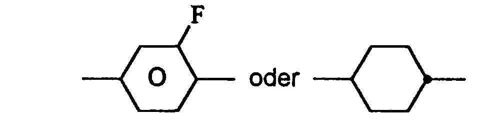 bedeutet,
   - Z: für eine Einfachbindung oder -COO- steht, und
   - L⁴ und L⁵: jeweils F oder H bedeuten.

Weiterhin bevorzugt ist eine IPS-Anzeige, wobei die Bildelemente mittels Aktivmatrix angesteuert werden.

Ein weiterer Gegenstand der Erfindung ist ein flüssigkristallines Medium mit positiver dielektrischer Anisotropie, welches mindestens eine Verbindung der Formel II und mindestens eine Verbindung mit einer Gruppe der Formel I* enthält, insbesondere welches
- 60 bis 95, vorzugsweise 70 bis 90 Gew.% mindestens einer Verbindung der Formel II,
- 5 bis 30, vorzugsweise 7 bis 20 Gew.% mindestens einer Verbindung der Formel I,
- 5 bis 20, vorzugsweise 7 bis 15 Gew.% mindestens einer Verbindung der Formel III, und
- 1 bis 10, vorzugsweise 2 bis 8 Gew.% einer Verbindung der Formel IV,
enthält.

Vorzugsweise enthält das Medium
- mindestens eine Verbindung ausgewählt aus den Formeln IIa, IIb und IIc enthält: 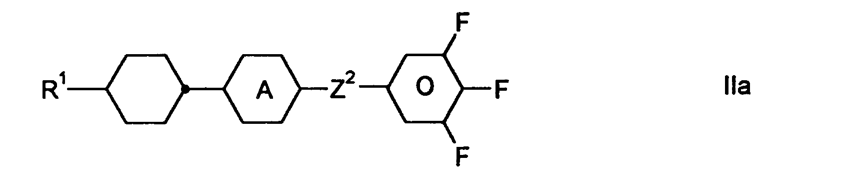 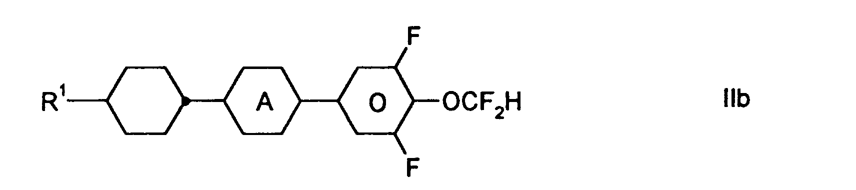 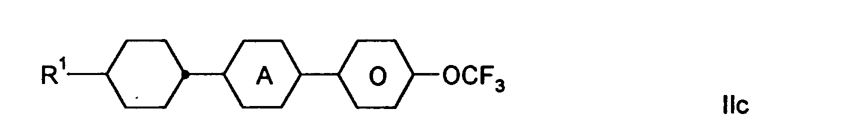
- mindestens eine Verbindung, ausgewählt aus den Formeln la und Ib: 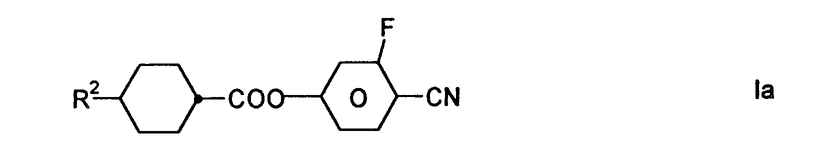 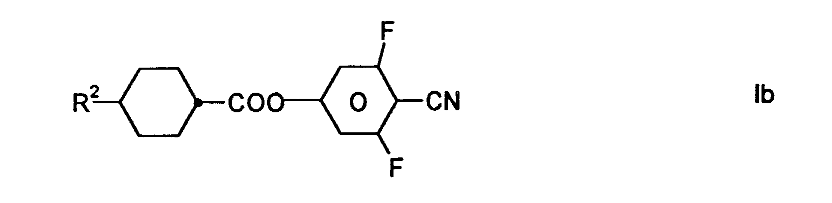
- gegebenenfalls mindestens eine Verbindung ausgewählt aus den Formeln IIIa, IIIb und IIIc: 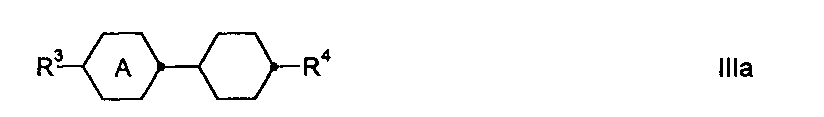 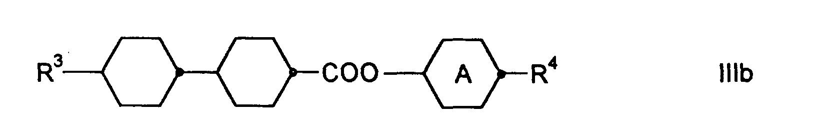 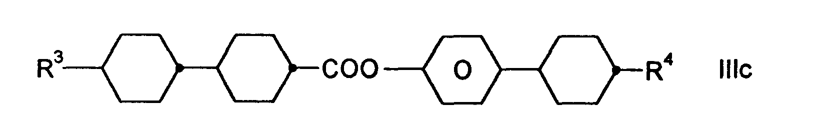 sowie
- mindestens eine Verbindung ausgewählt aus den Formeln IVa bis IVe: 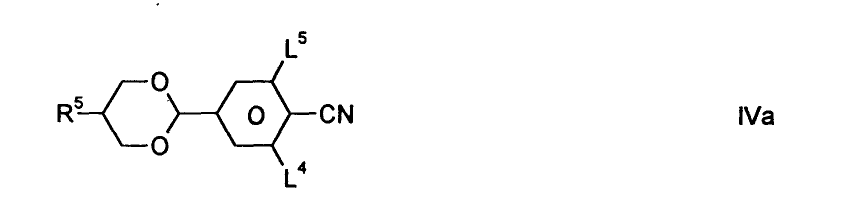 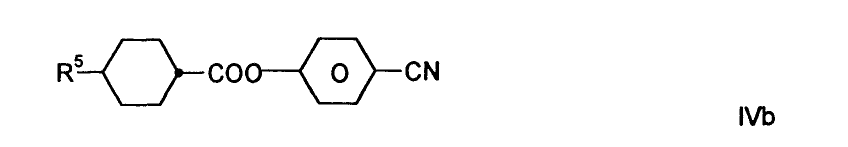 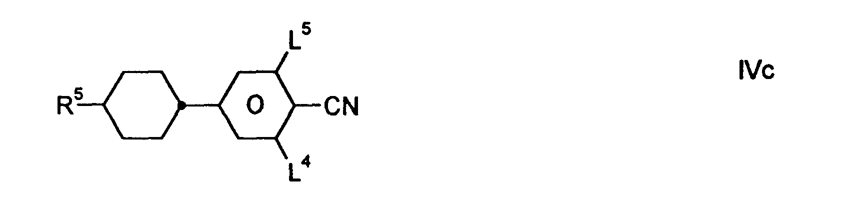 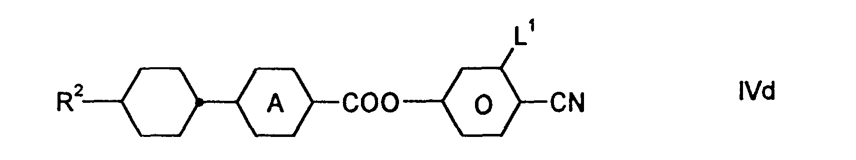 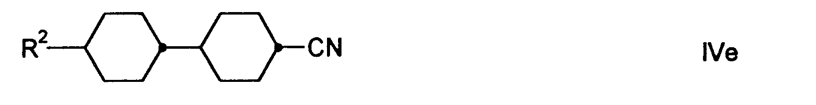 wobei 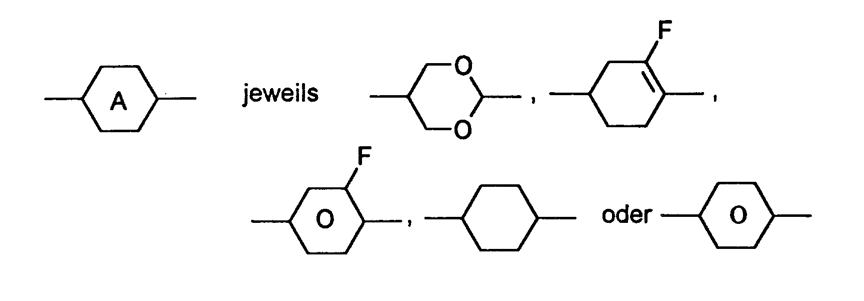 und
   - Z²: -COO-, -CH₂CH₂- oder eine Einfachbindung
   bedeuten und R¹, R², R³, R⁴, R⁵, L¹ bis L⁵ die jeweils angegebene Bedeutung besitzen.

Die erfindungsgemäßen flüssigkristallinen Medien weisen in der Regel eine Doppelbrechung (△n) < 0,12 auf, vorzugsweise ist △n zwischen 0,07 und 0,1, insbesondere zwischen 0,075 und 0,09.

Die Fließviskosität (bei 20 °C) der erfindungsgemäßen Materialien ist in der Regel kleiner als 30 mm² · s⁻¹, insbesondere zwischen 15 und 25 mm² · s⁻¹. Die Rotationsviskosität der erfindungsgemäßen Medien ist in der Regel keiner als 200 mPa·s, vorzugsweise kleiner als 150 mPa·s, insbesondere zwischen 80 und 120 mPa·s. Der spezifische Widerstand der erfindungsgemäßen Materialien ist in der Regel bei 20 °C zwischen 5 x 10¹⁰ und 5 x 10¹³ Ω·cm.

Es wurde gefunden, daß bereits ein relativ geringer Anteil an Verbindungen der Cyclohexancarbonyloxybenzonitrile im Gemisch mit üblichen Flüssigkristallmaterialien, insbesondere jedoch mit einer oder mehreren Verbindungen der Formel II, III und/oder IV zu einer beträchtlichen Erniedrigung der Schwellspannung und zu schnellen Schaltzeiten führt, wobei gleichzeitig breite nematische Phasen mit tiefen Übergangstemperaturen smektisch-nematisch beobachtet werden. Die Verbindungen der Formeln I bis IV sind farblos, stabil und untereinander und mit anderen Flüssigkristallmaterialien gut mischbar.

Der Ausdruck "Alkyl" umfaßt geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 2-5 Kohlenstoffatomen sind im allgemeinen bevorzugt.

Der Ausdruck "Alkenyl" umfaßt geradkettige und verzweigte Alkenylgruppen mit 2-7 Kohlenstoffatomen, insbesondere die geradkettigen Gruppen. Besonders Alkenylgruppen sind C₂-C₇-1 E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele bevorzugter Alkenylgruppen sind Vinyl, 1E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfaßt vorzugsweise geradkettige Gruppen mit endständigen Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" umfaßt vorzugsweise geradkettige Reste der Formel CₙH₂ₙ₊₁-O-(CH₂)ₘ, worin n und m jeweils unabhängig voneinander 1 bis 6 bedeuten. Vorzugsweise ist n = 1 und m 1 bis 6.

Durch geeignete Wahl der Bedeutungen von R¹⁻⁵ können die Ansprechzeiten, die Schwellenspannung, die Steilheit der Transmissionskennlinien etc. in gewünschter Weise modifiziert werden. Beispielsweise führen 1E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten.

Eine Gruppe -CH₂CH₂- in Z¹ bzw. Z² führt im allgemeinen zu höheren Werten von k₃₃/k₁₁ im Vergleich zu einer einfachen Kovalenzbindung. Höhere Werte von k₃₃/k₁₁ ermöglichen z.B. flachere Transmissionskennlinien in TN-Zellen mit 90° Verdrillung (zur Erzielung von Grautönen) und steilere Transmissionskennlinien in STN-, SBE- und OMI-Zellen (höhere Multiplexierbarkeit) und umgekehrt.

Das optimale Mengenverhältnis der Verbindungen der Formeln I und II + III + IV hängt weitgehend von den gewünschten Eigenschaften, von der Wahl der Komponenten der Formeln I, II, III und/oder IV und von der Wahl weiterer gegebenenfalls vorhandener Komponenten ab. Geeignete Mengenverhältnisse innerhalb des oben angegebenen Bereichs können von Fall zu Fall leicht ermittelt werden.

Die Gesamtmenge an Verbindungen der Formeln I bis IV in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die Ansprechzeiten und die Schwellenspannung ist jedoch in der Regel umso größer je höher die Gesamtkonzentration an Verbindungen der Formeln I und II ist.

In einer besonders bevorzugten Ausführungsform enthalten die erfindungsgemäßen Medien Verbindungen der Formel II, worin Q-X F, OCF₃ oder OCHF2 bedeutet. Eine günstige synergistische Wirkung mit den Verbindungen der Formel I führt zu besonders vorteilhaften Eigenschaften.

Die erfindungsgemäßen flüssigkristallinen Medien enthalten vorzugsweise neben einer oder mehreren Verbindungen der Formeln I, II, II und IV als weitere Bestandteile 2 bis 40, insbesondere 4 bis 30 Komponenten. Ganz besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, Phenyl- oder Cyclohexylbenzoate, Cyclohexancarbonsäurephenyl- oder cyclohexyl-ester, Phenyl- oder Cyclohexyl-ester der Cyclohexylbenzoesäure, Phenyl- oder Cyclohexyl-ester der Cyclohexylcyclohexancarbonsäure, Cyclohexyl-phenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Bis-cyclohexylbenzole, 4,4'-Bis-cyclo-hexylbiphenyle, Phenyl- oder Cyclohexylpyrimidine, Phenyl-oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenyl-cyclohexyl)-ethane, 1-Cyclohexyl-2-biphenylylethane, 1-Phenyl-2-cyclohexyl-phenylethane, gegebenenfalls halogenierten Stilbene, Benzylphenylether, Tolane und substituierten Zimtsäuren. Die 1,4-Phenylengruppen in diesen Verbindungen können auch fluoriert sein.

Die wichtigsten als weitere Bestandteile erfindungsgemäßer Medien in Frage kommenden Verbindungen lassen sich durch die Formeln 1, 2, 3, 4 und 5 charakterisieren:

R'-L-E-R" 1

R'-L-COO-E-R" 2

R'-L-OOC-E-R" 3

R'-L-CH₂CH₂-E-R" 4

R'-L-C≡C-E-R" 5

In den Formeln 1, 2, 3, 4 und 5 bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeuten.

Vorzugsweise ist einer der Reste L und E Cyc, Phe oder Pyr. E ist vorzugsweise Cyc, Phe oder Phe-Cyc. Vorzugsweise enthalten die erfindungsgemäßen Medien eine oder mehrere Komponenten ausgewählt aus den Verbindungen der Formeln 1, 2, 3, 4 und 5, worin L und E ausgewählt sind aus der Gruppe Cyc, Phe und Pyr und gleichzeitig eine oder mehrere Komponenten ausgewählt aus den Verbindungen der Formeln 1, 2, 3, 4 und 5, worin einer der Reste L und E ausgewählt ist aus der Gruppe Cyc, Phe und Pyr und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln 1, 2, 3, 4 und 5, worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln 1, 2, 3, 4 und 5 jeweils unabhängig voneinander Alkyl, Alkenyl, Alkoxy, Alkoxyalkyl, Alkenyloxy oder Alkanoyloxy mit bis zu 8 Kohlenstoffatomen. Im folgenden wird diese kleinere Untergruppe Gruppe A genannt und die Verbindungen werden mit den Teilformeln 1 a, 2a, 3a, 4a und 5a bezeichnet. Bei den meisten dieser Verbindungen sind R' und R" voneinander verschieden, wobei einer dieser Reste meist Alkyl, Alkenyl, Alkoxy oder Alkoxyalkyl ist.

In einer anderen als Gruppe B bezeichneten kleineren Untergruppe der Verbindungen der Formeln 1, 2, 3, 4 und 5 bedeutet R" -F, -Cl, -NCS oder -(O)ᵢ CH₃₋₍ₖ₊ₗ₎ FₖClₗ, wobei i 0 oder 1 und k+l 1, 2 oder 3 sind; die Verbindungen, in denen R" diese Bedeutung hat, werden mit den Teilformeln 1b, 2b, 3b, 4b und 5b bezeichnet. Besonders bevorzugt sind solche Verbindungen der Teilformeln 1b, 2b, 3b, 4b und 5b, in denen R" die Bedeutung -F, -Cl, -NCS, -CF₃, -OCHF₂ oder -OCF₃ hat.

In den Verbindungen der Teilformeln 1b, 2b, 3b, 4b und 5b hat R' die bei den Verbindungen der Teilformeln 1 a-5a angegebene Bedeutung und ist vorzugsweise Alkyl, Alkenyl, Alkoxy oder Alkoxyalkyl.

In einer weiteren kleineren Untergruppe der Verbindungen der Formeln 1, 2, 3, 4 und 5 bedeutet R" -CN; diese Untergruppe wird im folgenden als Gruppe C bezeichnet und die Verbindungen dieser Untergruppe werden entsprechend mit Teilformeln 1c, 2c, 3c, 4c und 5 c beschrieben. In den Verbindungen der Teilformeln 1c, 2c, 3c, 4c und 5c hat R' die bei den Verbindungen der Teilformeln 1a-5a angegebene Bedeutung und ist vorzugsweise Alkyl, Alkoxy oder Alkenyl.

Neben den bevorzugten Verbindungen der Gruppen A, B und C sind auch andere Verbindungen der Formeln 1, 2, 3, 4 und 5 mit anderen Varianten der vorgesehenen Substituenten gebräuchlich. Alle diese Substanzen sind nach literaturbekannten Methoden oder in Analogie dazu erhältlich.

Die erfindungsgemäßen Medien enthalten neben den Verbindungen der Formel I vorzugsweise eine oder mehrere Verbindungen, welche ausgewählt werden aus der Gruppe A und/oder Gruppe B und/oder Gruppe C. Die Massenanteile der Verbindungen aus diesen Gruppen an den erfindungsgemäßen Medien sind vorzugsweise

| | |
|---|---|
| Gruppe A | 0 bis 90 %, vorzugsweise 20 bis 90 %, insbesondere 30 bis 90 % |
| Gruppe B | 0 bis 80 %, vorzugsweise 10 bis 80 %, insbesondere 10 bis 65 % |
| Gruppe C | 0 bis 80 %, vorzugsweise 5 bis 80 %, insbesondere 5 bis 50 % |

wobei die Summe der Massenanteile der in den jeweiligen erfindungsgemäßen Medien enthaltenen Verbindungen aus den Gruppen A und/oder B und/oder C vorzugsweise 5 % bis 90 % und insbesondere 10 % bis 90 % beträgt.

Die erfindungsgemäßen Medien enthalten vorzugsweise 1 bis 40 %, insbesondere vorzugsweise 5 bis 30 % an erfindungsgemäßen Verbindungen. Weiterhin bevorzugt sind Medien, enthaltend mehr als 40 %, insbesondere 45 bis 90 % an erfindungsgemäßen Verbindungen. Die Medien enthalten vorzugsweise drei, vier oder fünf erfindungsgemäße Verbindungen.

Der Aufbau der erfindungsgemäßen IPS-Anzeige entspricht der für derartige Anzeigen üblichen Bauweise, wie z.B. beschrieben in der WO 91/10936 oder der EP 0 588 568. Dabei ist der Begriff der üblichen Bauweise hier weit gefaßt und umfaßt auch alle Abwandlungen und Modifikationen der IPS-Anzeige, insbesondere z.B. auch Matrix-Anzeigeelemente auf Basis poly-Si TFT oder MIM.

Ein wesentlicher Unterschied der erfindungsgemäßen Anzeigen zu den bisher üblichen besteht jedoch in der Wahl der Flüssigkristallparameter der Flüssigkristallschicht.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe oder chirale Dotierstoffe zugesetzt werden.

C bedeutet eine kristalline, S eine smektische, S_{B} eine smektisch B, N eine nematische und I die isotrope Phase.

V₀ bezeichnet die Spannung für 0 % Transmission (Blickrichtung senkrecht zur Plattenoberfläche). tₒₙ bezeichnet die Einschaltzeit und t_{off} die Ausschaltzeit. Vₘₐₓ bezeichnet die Spannung bei maximaler Transmission. Δn bezeichnet die optische Anisotropie und n₀ den Brechungsindex (jeweils bei 589 nm). Δε bezeichnet die dielektrische Anisotropie (Δε = ε_{∥} -ε_{┴}, wobei ε_{∥} die Dielektrizitätskonstante parallel zu den Moleküllängsachsen und ε_{┴} die Dielektrizitätskonstante senkrecht dazu bedeutet). Die elektrooptischen Daten wurden in einer IPS-Zelle bei 20 °C gemes-sen, sofern nicht ausdrücklich etwas anderes angegeben wird. Die optischen Daten wurden bei 20 °C gemessen, sofern nicht ausdrücklich etwas anderes angegeben wird.

Es wurde eine IPS-Testzelle gemäß WO 91/10936 mit einer Kammstruktur eingesetzt, wobei die Elektroden und die Elektrodenzwischenräume eine Dicke von 20 µm aufweisen.

Die Schichtdicke d des Flüssigkristallmaterials beträgt 5 µm. Die Zelle weist ferner auf:

| | |
|---|---|
| Ausgangsverdrillungswinkel | 0° |
| Ausrichtungswinkel | 5° |
| Tilt-Anstellwinkel | 3° |

Die Zellen sind im "Aus" Zustand dunkel.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ sind geradkettige Alkylreste mit n bzw. m C-Atomen. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich ein Code für die Substituenten R¹, R², L¹ und L²:

| Code für R¹, R², L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | F | H |
| nCF₃ | CₙH₂ₙ₊₁ | CF₃ | H | H |
| nOCF₃ | CₙH₂ₙ₊₁ | OCF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-C₂H₂ₛ- | CN | H | H |
| nAm | CₙH₂ₙ₊₁ | COOCₘH₂ₘ₊₁ | H | H |
| nF.F.F | CₙH₂ₙ₊₁ | F | F | F |
| nCl.F.F | CₙH₂ₙ₊₁ | Cl | F | F |
| nCF₃.F.F | CₙH₂ₙ₊₁ | CF₃ | F | F |
| nOCF₃.F.F | CₙH₂ₙ₊₁ | OCF₃ | F | F |
| nOCF₂.F.F | CₙH₂ₙ₊₁ | OCHF₂ | F | F |
| nOCF₃.F | CₙH₂ₙ₊₁ | OCF₃ | F | H |
| nCN.F.F | CₙH₂ₙ₊₁ | CN | F | F |
| nCN.F | CₙH₂ₙ₊₁ | CN | F | H |

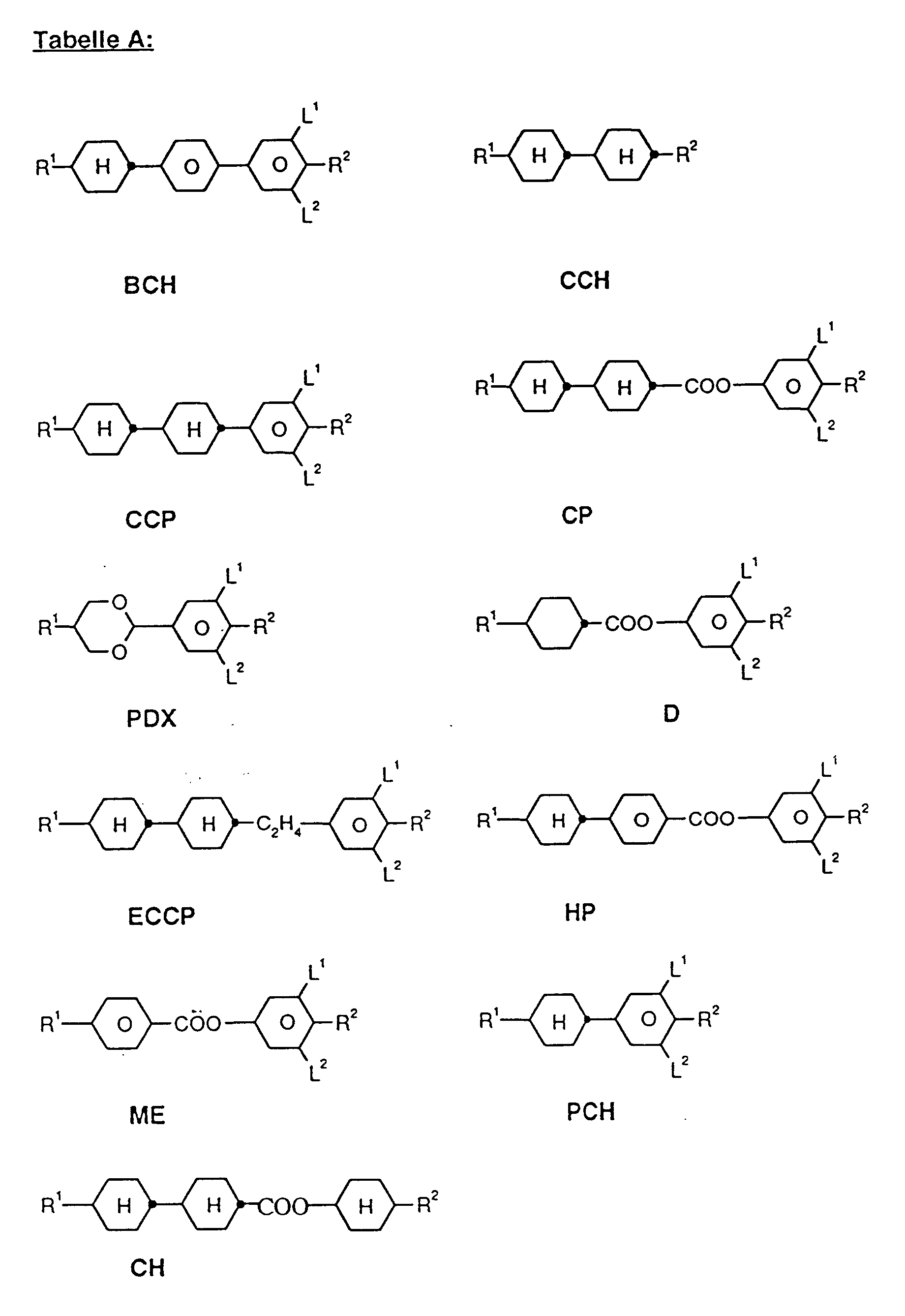

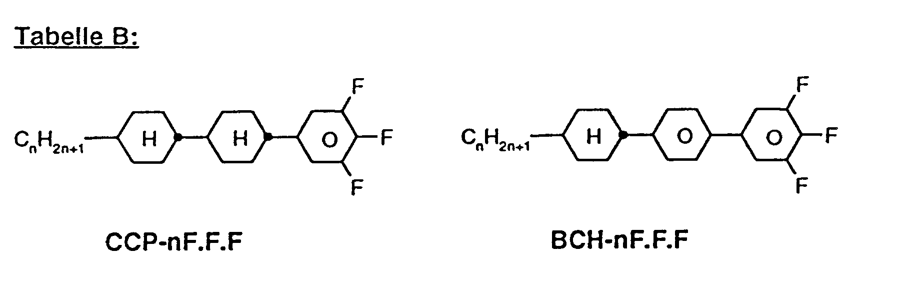

### Beispiel 1

Eine IPS-Anzeige enthält eine nematische Mischung mit

| | |
|---|---|
| Klärpunkt | +76 °C |
| Δn | 0,0776 |
| nₒ | 1,4725 |
| Δε | +10,8 |
| ε_{⊥} | 4,4 |
| K₁ [10⁻¹² N] (20 °C) | 8,1 |
| K₃ [10⁻¹² N] (20 °C) | 12,9 |

bestehend aus

| | |
|---|---|
| PCH-3 | 5,00 |
| CCP-2F.F.F | 13,00 |
| CCP-3F.F.F | 9,00 |
| CCP-5F.F.F | 9,00 |
| CCP-20CF₃ | 15,00 |
| CCP-30CF₃ | 14,00 |
| CCP-50CF₃ | 5,00 |
| D-3N.F.F | 12,00 |
| D-5N.F | 5,00 |
| CCH-34 | 8,00 |
| CCH-35 | 5,00 |

und weist einen hohen Kontrast und niedrige Schaltzeiten auf.

Die IPS-Anzeigen des Beispiels 1 zeichnet sich durch eine geringe Ansteuerspannung aus und führen in Zellen nach Embodient 1 der EP 0 588 568 zu guten "Voltage Holding Ratio" Werten.

### Vergleichsbeispiel

Eine IPS-Anzeige enthält eine nematische Mischung mit

| | |
|---|---|
| Klärpunkt | 64 °C |
| Δn | 0,0813 |
| Δε | +12,0 |

bestehend aus

| | |
|---|---|
| ME2N.F | 4,00 |
| ME3N.F | 4,00 |
| ME5N.F | 10,00 |
| ME7N.F | 6,00 |
| CCH-2 | 12,00 |
| CCH-3 | 12,00 |
| CCH-4 | 12,00 |
| CCP-30CF3 | 6,00 |
| CCP-50CF3 | 6,00 |
| CH-33 | 3,00 |
| CH-35 | 3,00 |
| CCH-34 | 10,00 |
| CCH-35 | 4,00 |
| CCH-303 | 4,00 |
| CCH-501 | 4,00 |

und weist deutlich niedrigeren Klärpunkt, einen geringeren Kontrast und eine höhere Schaltzeit als die Anzeige von Beispiel 1 auf.

## Patentansprüche

1. Elektrooptische Flüssigkristallanzeige
- mit einer Umorientierungsschicht zur Umorientierung der Flüssigkristalle, deren Feld eine signifikante Komponente parallel zur Flüssigkristallschicht aufweist,
- enthaltend ein flüssigkristallines Medium mit positiver dielektrischer Anisotropie, dadurch gekennzeichnet, daß das Medium mindestens eine Verbindung der Formel II enthält, 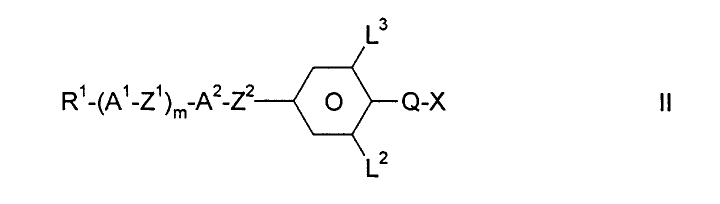 worin
R¹ H, einen unsubstituierten, einen einfach durch CN oder CF₃ oder einen mindestens einfach durch Halogen substituierten Alkyl- oder Alkenylrest mit 1 bis 15 C-Atomen, wobei in diesen Resten auch eine oder mehrere CH₂-Gruppen jeweils unabhängig voneinander durch -O-, -S-, 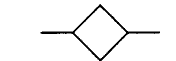 -CO-, -CO-O- oder -O-CO-O- so ersetzt sein können, daß O-Atome nicht direkt miteinander verknüpft sind,
Q einen Rest der Formel,
-(O)_{q}-(CH₂)ᵣ-(CF₂)ₛ-
worin
q 0 oder 1 ist,
r 0 oder eine ganze Zahl zwischen 1 und 6 ist und
s eine ganze Zahl zwischen 0 und 6 ist,
X F oder Cl, im Falle s ≠ 0 auch H, und
A¹ und A² jeweils unabhängig voneinander einen
(a) 1,4-Cyclohexenylen- oder trans-1,4-Cyclohexylenrest, worin auch eine oder mehrere nicht benachbarte CH₂-Gruppen durch -O- und/oder -S- ersetzt sein können,
(b) 1,4-Phenylenrest, worin auch eine oder zwei CH-Gruppen durch N ersetzt sein können,
(c) Rest aus der Gruppe 1,4-Bicyclo(2,2,2)-octylen, Piperidin-1,4-diyl, Naphthalin-2,6-diyl, Decahydronapthalin-2,6-diyl und 1,2,3,4-Tetrahydronapthalin-2,6-diyl,
wobei die Reste (a) und (b) durch ein oder zwei Fluor substituiert sein können,
L² und L³ jeweils unabhängig voneinander H oder F,
Z¹ und Z² jeweils unabhängig voneinander -CO-O-, -O-CO-, -CH₂O-, -OCH₂-, -CH₂CH₂, -CH=CH-, -C≡C- oder eine Einfachbindung, einer der Reste Z¹ und Z² auch -(CH₂)₄- oder -CH=CH-CH₂CH₂- und
m 0, 1 oder 2
bedeuten, und
daß das Medium mindestens eine Verbindung der Formel I enthält, 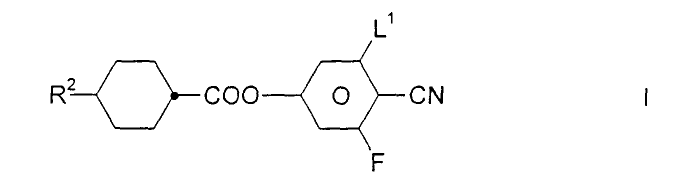 worin
L¹ H oder F ist, und
R² die für R¹ angegebene Bedeutung besitzt.

2. Flüssigkristallanzeige nach Anspruch 1, dadurch gekennzeichnet, daß das Medium eine dielektrische Anisotropie Δε > 8,5 aufweist.

3. Flüsigkristallanzeige nach einem der Ansprüche 1 bis 2, dadurch gekennzeichnet, daß das Medium mindestens eine Verbindung der Formel III enthält,
R³-(A³-Z³)ₒ-A⁴-R⁴ III
worin
R³ und R⁴ jeweils unabhängig voneinander die für R¹ angegebene Bedeutung besitzen,
A³ und A⁴ jeweils unabhängig voneinander die für A¹und A² angegebene Bedeutung besitzen,
Z³ jeweils unabhängig voneinander die für Z¹ und Z² angegebene Bedeutung aufweist, und
o 1, 2 oder 3 ist.

4. Flüssigkristallanzeige nach einem der Ansprüche 1 bis 3, dadurch gekennzeichnet, daß das Medium mindestens eine von Formel I verschiedene Verbindung der Formel IV enthält, 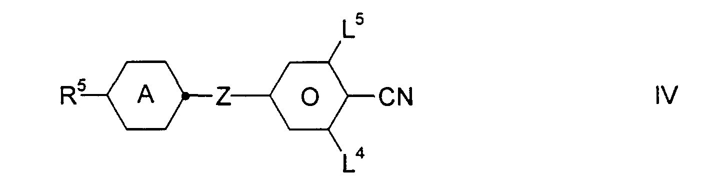 worin
R⁵ die für R¹ angegebene Bedeutung aufweist, 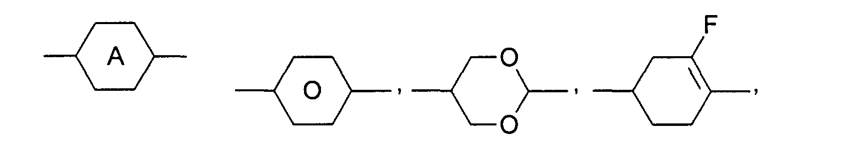 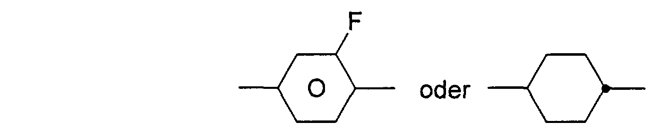 bedeutet,
Z für eine Einfachbindung oder -COO- steht, und
L⁴ und L⁵ jeweils unabhängig voneinander F oder H
bedeuten.

5. Anzeige nach einem der Ansprüche 1 bis 4, dadurch gekennzeichnet, daß die Bildelemente mittels Aktivmatrix angesteuert werden.

6. Flüssigkristallines Medium mit positiver dielektrischer Anisotropie, welches eine Zusammensetzung gemäß der Ansprüche 1 bis 5 aufweist.

7. Flüssigkristallines Medium nach Anspruch 6, dadurch gekennzeichnet, daß es
- 60 bis 95 Gew.% mindestens einer Verbindung der Formel II,
- 5 bis 30 Gew.% mindestens einer Verbindung der Formel I,
- 5 bis 20 Gew.% mindestens einer Verbindung der Formel III, und
- 1 bis 10 Gew.% mindestens einer Verbindung der Formel IV,
enthält.

8. Flüssigkristallines Medium nach Anspruch 6, dadurch gekennzeichnet, daß es
- 70 bis 90 Gew.% mindestens einer Verbindung der Formel II,
- 7 bis 20 Gew.% mindestens einer Verbindung der Formel I,
- 7 bis 15 Gew.% mindestens einer Verbindung der Formel III, und
- 2 bis 8 Gew.% mindestens einer Verbindung der Formel IV,
enthält.

9. Flüssigkristallines Medium nach Anspruch 6 oder 7, dadurch gekennzeichnet, daß es
- mindestens eine Verbindung ausgewählt aus den Formeln IIa, IIb und IIc enthält: 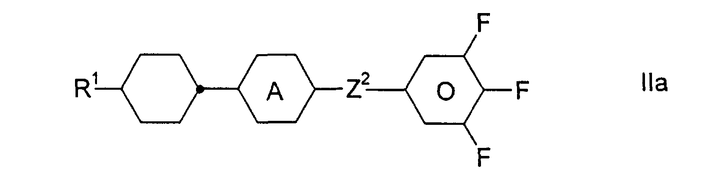 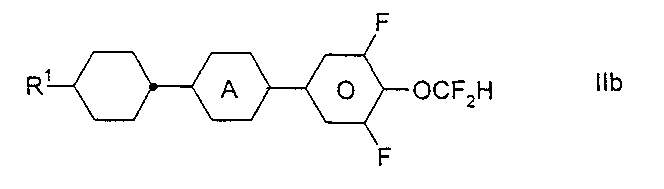 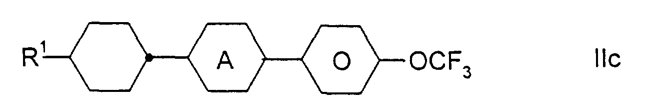
- mindestens eine Verbindung ausgewählt aus den Formeln la und lb enthält: 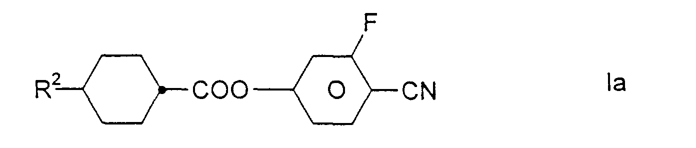 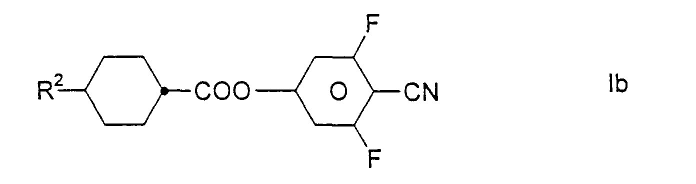
- gegebenenfalls mindestens eine Verbindung ausgewählt aus den Formeln IIIa, IIIb und IIIc enthält: 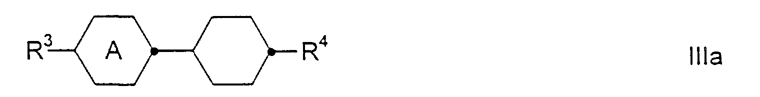 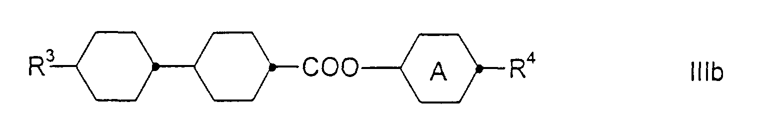 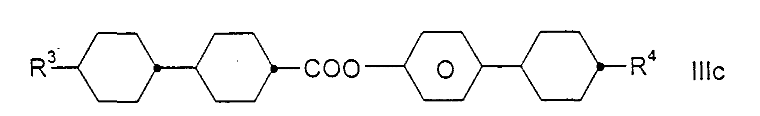 sowie
- mindestens eine Verbindung ausgewählt aus den Formeln IVa, IVb und IVc enthält: 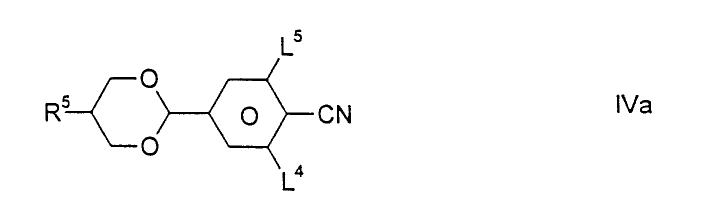 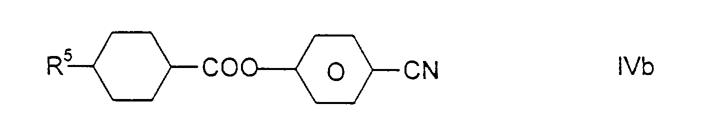 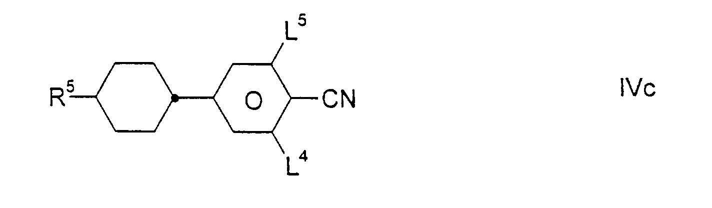 worin 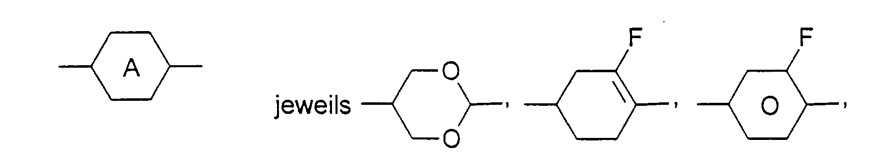 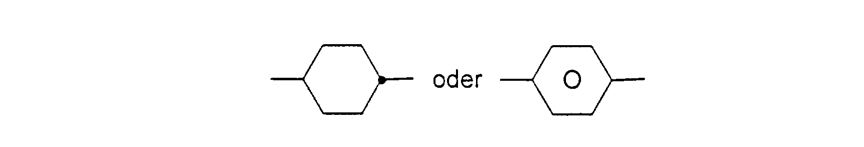 und
Z² -COO-, -CH₂CH₂- oder eine Einfachbindung
bedeuten und R¹, R², R³, R⁴, R⁵, L¹ bis L⁵ die jeweils angegebene Bedeutung besitzen.

## Claims

1. Electro-optical liquid-crystal display
- having a realignment layer for realigning the liquid crystals, where the field thereof has a significant component parallel to the liquid-crystal layer,
- containing a liquid-crystalline medium having positive dielectric anisotropy, characterized in that the medium comprises at least one compound of the formula II 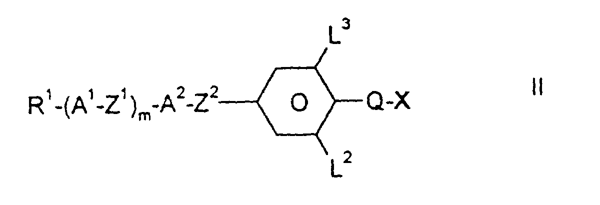 in which
R¹ is H, an alkyl or alkenyl radical having 1 to 15 carbon atoms which is unsubstituted, monosubstituted by CN or CF₃ or at least monosubstituted by halogen, where, in addition, one or more CH₂ groups in these radicals may each, independently of one another, be replaced by -O-, -S-, 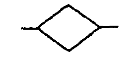 -CO-, -CO-O- or -O-CO-O- in such a way that O atoms are not linked directly to one another,
Q is a radical of the formula
- (O)_{q}- (CH₂)ᵣ- (CF₂)ₛ-
in which
q is 0 or 1,
r is 0 or an integer between 1 and 6, and
s is an integer between 0 and 6,
X is F or Cl, and in the case where s ≠ 0, is alternatively H, and
A¹ and A² are each, independently of one another,
(a) a 1,4-cyclohexenylene or trans-1,4-cyclohexylene radical in which, in addition, one or more non-adjacent CH₂ groups may be replaced by -O- and/or -S-,
(b) a 1,4-phenylene radical in which, in addition, one or two CH groups may be replaced by N,
(c) a radical from the group consisting of 1,4-bicyclo[2.2.2]octylene, piperidine-1,4-diyl, naphthalene-2,6-diyl, decahydronaphthalene-2,6-diyl and 1,2,3,4-tetrahydronaphthalene-2,6,diyl,
where the radicals (a) and (b) may be substituted by one or two fluorine atoms,
L² and L³ are each, independently of one another, H or F,
Z¹ and Z² are each, independently of one another, -CO-O-, -O-CO-, -CH₂O-, -OCH₂-, -CH₂CH₂-, -CH=CH-, -C≡C- or a single bond, or one of the radicals Z¹ and Z² is alternatively - (CH₂)₄- or -CH=CH-CH₂CH₂-, and
m is 0, 1 or 2
and in that the medium comprises at least one compound of the formula I 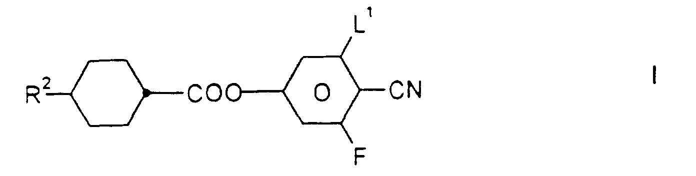 in which
L¹ is H or F, and
R² is as defined for R¹.

2. Liquid-crystal display according to Claim 1, characterized in that the medium has a dielectric anisotropy Δε of > 8.5.

3. Liquid-crystal display according to one of Claims 1 to 2, characterized in that the medium comprises at least one compound of the formula III
R³(A³-Z³)ₒ-A⁴-R⁴ III
in which
R³ and R⁴ are each, independently of one another, as defined for R¹,
A³ and A⁴ are each, independently of one another, as defined for A¹ and A²,
Z³ is in each case, independently of the others, as defined for Z¹ and Z², and
o is 1, 2 or 3.

4. Liquid-crystal display according to one of Claims 1 to 3, characterized in that the medium comprises at least one compound of the formula IV 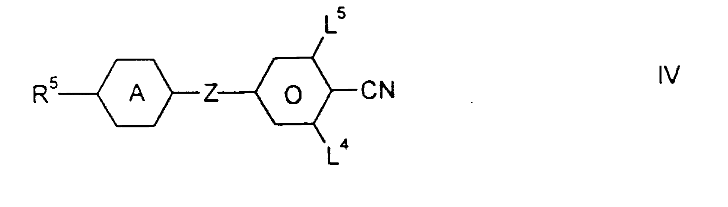 in which
R⁵ is as defined for R¹, 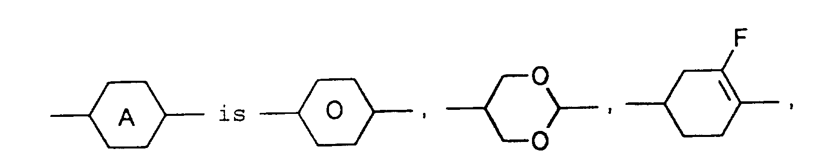 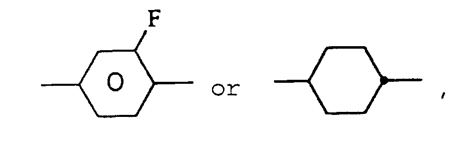
Z is a single bond or -COO-, and
L⁴ and L⁵ are each, independently of one another, F or H,
but not of the formula I.

5. Display according to one of Claims 1 to 4, characterized in that the pixels are addressed by means of an active matrix.

6. Liquid-crystalline medium having positive dielectric anisotropy which has a composition according to Claims 1 to 5.

7. Liquid-crystalline medium according to Claim 6, characterized in that it comprises
- from 60 to 95 % by weight of at least one compound of the formula II,
- from 5 to 30 % by weight of at least one compound of the formula I,
- from 5 to 20 % by weight of at least one compound of the formula III, and
- from 1 to 10 % by weight of at least one compound of the formula IV.

8. Liquid-crystalline medium according to claim 6, characterized in that it comprises
- from 70 to 90 % by weight of at least one compound of the formula II
- from 7 to 20 % by weight of at least one compound of the formula I,
- from 7 to 15 % by weight of at least one compound of the formula III, and
- from 2 to 8 % by weight of at least one compound of the formula IV.

9. Liquid-crystalline medium according to Claim 6 or 7, characterized in that it comprises
- at least one compound selected from the formulae IIa, IIb and IIc: 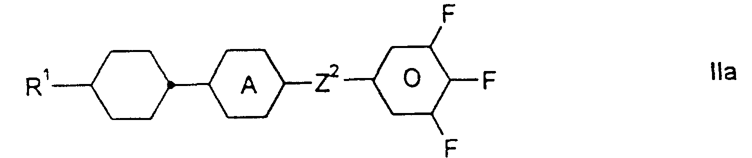 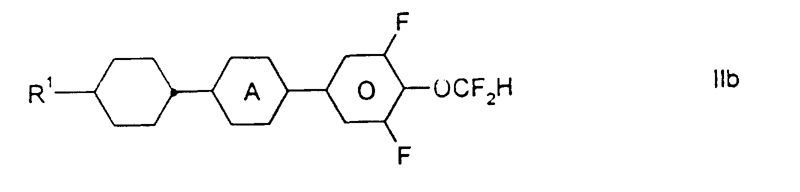 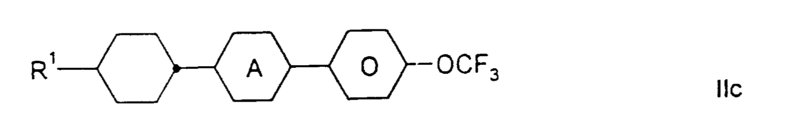
- at least one compound selected from the formulae Ia and Ib: 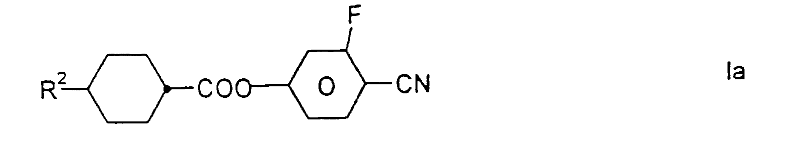 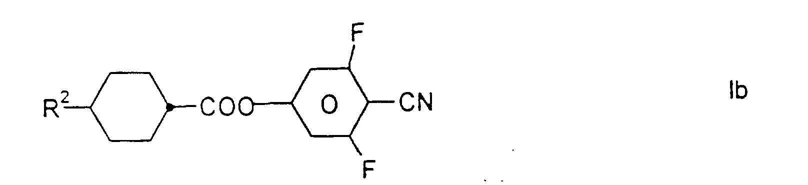
- if desired at least one compound selected from the formulae IIIa, IIIb and IIIc: 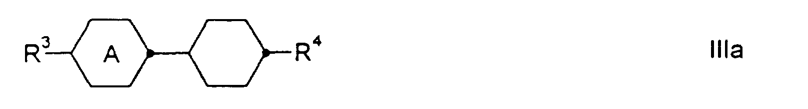 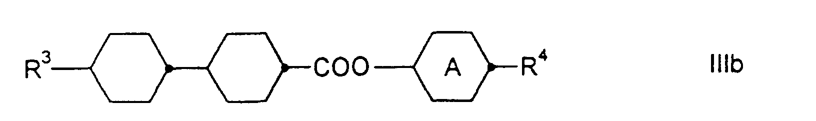 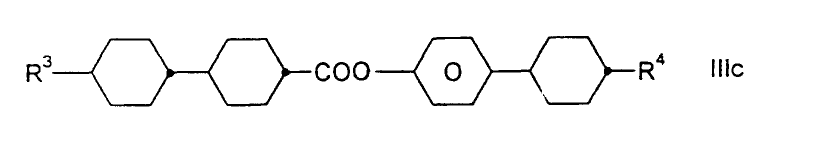 and
- at least one compound selected from the formulae IVa, IVb and IVc: 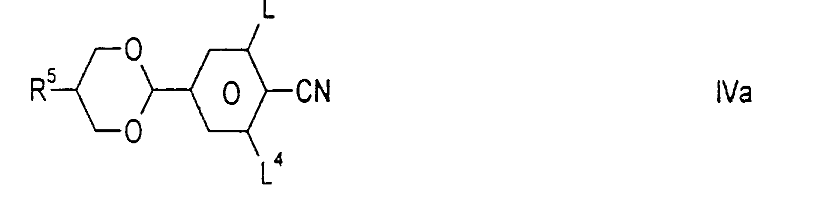 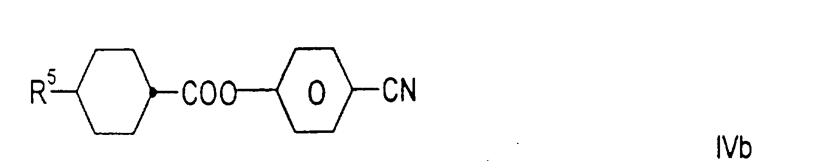 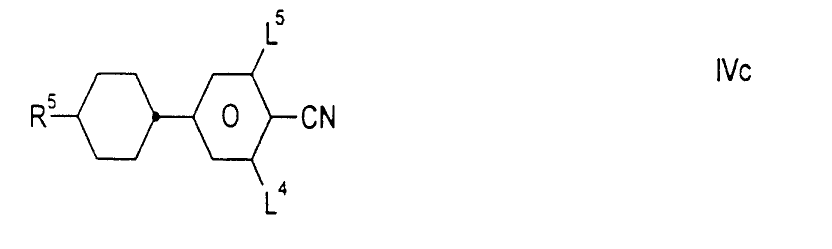 where 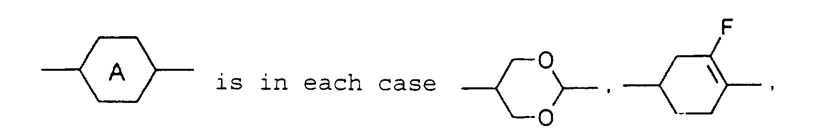 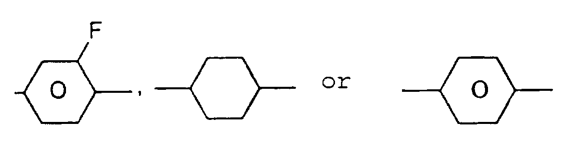 and
Z² is -COO-, -CH₂CH₂- or a single bond,
and R¹, R², R³, R⁴, R⁵, L¹ to L⁵ are as defined in each case.

## Revendications

1. Afficheur électro-optique à cristaux liquides
- comportant une couche de réorientation pour la réorientation des cristaux liquides, dont le champ présente une importante composante parallèle à la couche de cristaux liquides,
- contenant un milieu de type cristal liquide à anisotropie diélectrique positive, caractérisé en ce que le milieu contient au moins un composé de formule II 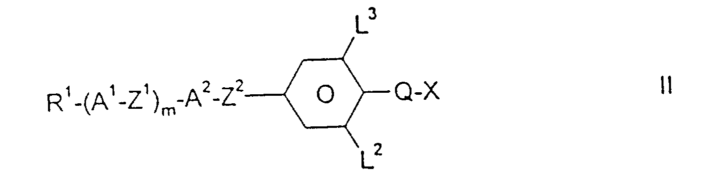 dans laquelle
R¹ représente H, ou un radical alkyle ou alcényle ayant de 1 à 15 atomes de carbone, non substitué ou substitué une fois par CN ou CF₃ ou au moins une fois par un atome d'halogène, un ou plusieurs groupes CH₂ dans ces radicaux pouvant également être remplacés, indépendamment les uns des autres, par -O-, -S-, 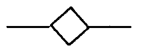 -CO-, -CO-O- ou -O-CO-O-, de sorte que des atomes d'oxygène ne sont pas reliés directement entre eux,
Q représente un radical de formule
-(O)_{q}-(CH₂)ᵣ-(CF₂)ₛ-
dans laquelle
q est 0 ou 1,
r est 0 ou un nombre entier compris entre 1 et 6, et
s est un nombre entier compris entre 0 et 6,
X représente F ou Cl et, dans le cas où s ≠ 0, représente également H, et
A¹ et A² représentent chacun, indépendamment l'un de l'autre, un
(a) radical 1,4-cyclohexénylène ou *trans*-1,4-cyclohexylène, dans lequel un ou plusieurs groupes CH₂ non contigus peuvent également être remplacés par -O- et/ou -S-,
(b) radical 1,4-phénylène, dans lequel un ou deux groupes CH peuvent également être remplacés par N,
(c) radical choisi parmi les radicaux 1,4-bicyclo[2.2.2]octylène, pipéridin-1,4-diyle, naphtalène-2,6-diyle, décahydronaphtalène-2,6-diyle et 1,2,3,4-tétrahydronaphtalène-2,6-diyle,
les radicaux (a) et (b) pouvant être substitués par un ou deux atomes de fluor,
L² et L³ représentent chacun, indépendamment l'un de l'autre, H ou F,
Z¹ et Z² représentent chacun, indépendamment l'un de l'autre, -CO-O-, -O-CO-, -CH₂O-, -OCH₂-, -CH₂CH₂-, -CH=CH-, -C≡C- ou une liaison simple, l'un des radicaux Z¹ et Z² pouvant également représenter le groupe -(CH₂)₄- ou -CH=CH-CH₂CH₂-, et
m est 0, 1 ou 2,
et
en ce que le milieu contient au moins un composé de formule I, 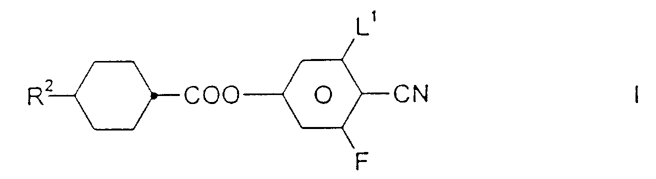 dans laquelle
L¹ est H ou F,
R² a la signification donnée pour R¹.

2. Afficheur à cristaux liquides selon la revendication 1, caractérisé en ce que le milieu présente une anisotropie diélectrique Δε > 8,5.

3. Afficheur à cristaux liquides selon la revendication 1 ou 2,
caractérisé en ce que le milieu contient au moins un composé de formule III
R³-(A³-Z³)ₒ-A⁴-R⁴ III
dans laquelle
R³ et R⁴ ont chacun, indépendamment l'un de l'autre, la signification donnée pour R¹,
A³ et A⁴ ont chacun, indépendamment l'un de l'autre, la signification donnée pour A¹ et A²,
Z³ a dans chaque cas, indépendamment les uns des autres, la signification donnée pour Z¹ et Z², et
O est 1, 2 ou 3.

4. Afficheur à cristaux liquides selon l'une des revendications 1 à 3, caractérisé en ce que le milieu contient au moins un composé de formule IV, différent d'un composé de formule I, 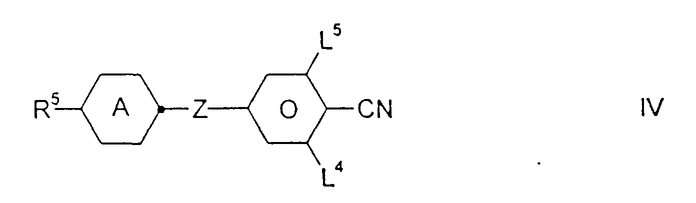 dans laquelle
R⁵ a la signification donnée pour R¹, 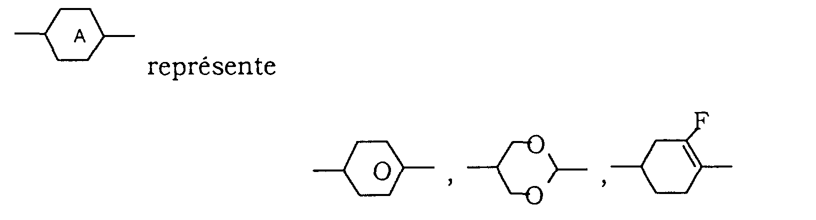 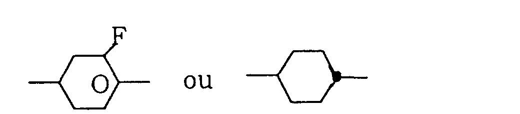
Z représente une liaison simple ou -COO-, et
L⁴ et L⁵ représentent chacun, indépendamment l'un de l'autre, F ou H.

5. Afficheur selon l'une des revendications 1 à 4, caractérisé en ce que les éléments d'image sont excités au moyen d'une matrice active.

6. Afficheur à cristaux liquides à anisotropie diélectrique positive, qui a une composition selon les revendications 1 à 5.

7. Milieu de type cristal liquide selon la revendication 6, caractérisé en ce qu'il contient
- de 60 à 95 % en poids d'au moins un composé de formule II,
- de 5 à 30 % en poids d'au moins un composé de formule I,
- de 5 à 20 % en poids d'au moins un composé de formule III,
et
- de 1 à 10 % en poids d'au moins un composé de formule IV.

8. Milieu de type cristal liquide selon la revendication 6, caractérisé en ce qu'il contient
- de 70 à 90 % en poids d'au moins un composé de formule II,
- de 7 à 20 % en poids d'au moins un composé de formule I,
- de 7 à 15 % en poids d'au moins un composé de formule III,
et
- de 2 à 8 % en poids d'au moins un composé de formule IV.

9. Milieu de type cristal liquide selon la revendication 6 ou 7,
caractérisé en ce qu'il contient
- au moins un composé choisi parmi ceux de formules IIa, IIb et IIc : 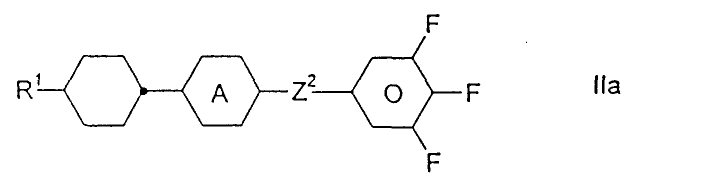 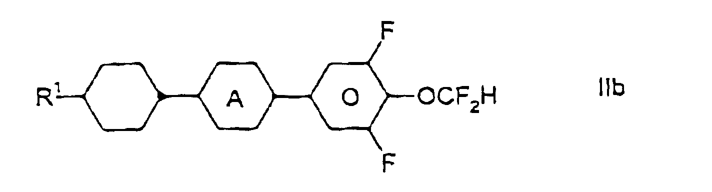 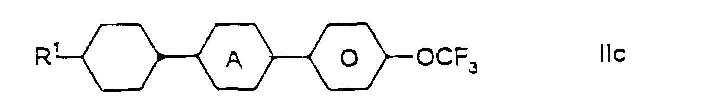
- au moins un composé choisi parmi ceux de formules Ia et Ib : 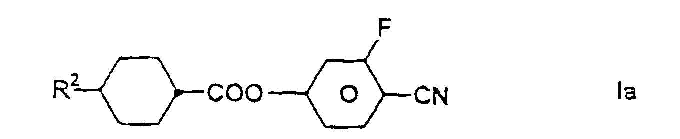 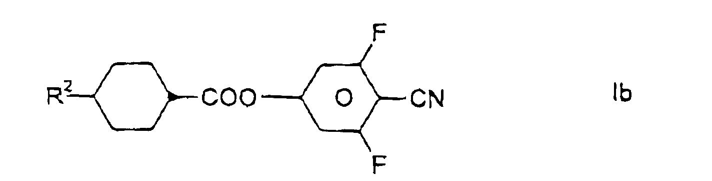
- éventuellement au moins un composé choisi parmi ceux de formules IIIa, IIIb et IIIc : 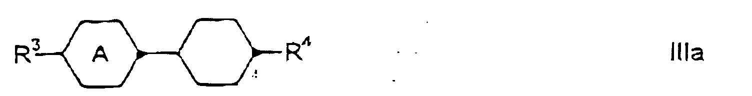 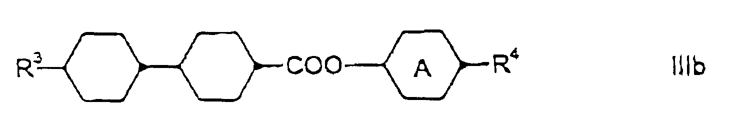 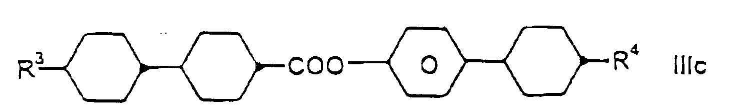 ainsi que
- au moins un composé choisi parmi ceux de formules IVa, IVb et IVc : 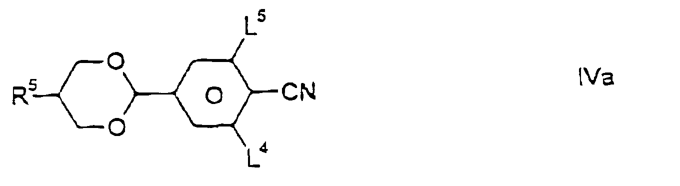 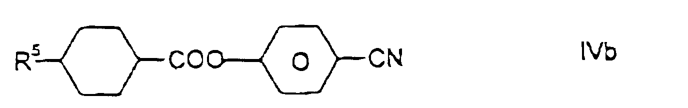 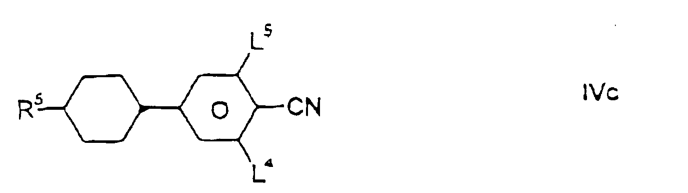 dans lesquelles 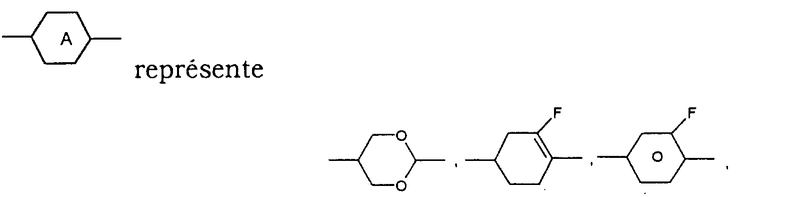 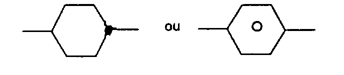 et
Z² représente -COO-, -CH₂CH₂- ou une liaison simple, et
R¹, R², R³, R⁴, R⁵, L¹ à L⁵ ont chacun la signification indiquée.
